# EUROPEAN PATENT APPLICATION

(11) **EP 1 037 466 A2**
(43) Date of publication of application: **20.09.2000**
(21) Application number: 00301933.8
(22) Date of filing: 09.03.2000
(51) Int. Cl.: H04N 7/173

(54) **Program distribution system, method of program distribution, transmitter and receiver**

(30) Priority: 10.03.1999 JP 6349199
(71) Applicant: SONY CORPORATION, Tokyo 141 (JP)
(72) Inventor: Ozawa, Toshiro, Shinagawa-ku, Tokyo 141 (JP)
(74) Representative: Horner, David Richard

(57) **Abstract**

A program distribution system is provided enabling a user to easily buy a program and having improved operability. The program distribution system provides a distributing program storing means 12 for storing plural distributing programs, a distribution control means 15 which receives a distribution request to request the distribution of a distributing program, formed in a free text described in the arbitrary style of the user of the receiving means 30, and compares a word described in the distribution request with each title of the distributing programs stored in the distributing program storage means 12. If a title that corresponds to the word distributed in the distribution request is found, it reads out the distributing program having the above title from the distributing program storing means 12, the distribution means 13 and 14 being arranged to distribute the read-out distributing program to the receiver 30, and the receiving means 30 receiving the distributed program.

## Description

### BACKGROUND OF THE INVENTION

### FIELD OF THE INVENTION

The present invention relates to a program distribution system, a method of program distribution, a transmitter and a receiver, and is, for example, applicable to a video on demand (VOD) service in satellite broadcasting.

### DESCRIPTION OF THE RELATED ART

Hereinafter, in a satellite broadcasting or a cable television, a service called pay per view has been provided (hereinafter, this is referred to as PPV) in which a user pays a viewing fee for each his desired program (this is referred to as "buy a program") and then views the above pay program.

When executing the above PPV service, the user first operates a receiver called integrated receiver decoder (IRD) so that an electric program guide called EPG is displayed on a monitor screen that is connected to the above IRD, and specifies to buy a program wanting to view on the above EPG. The IRD transmits the program ID of the program that was specified by the user to buy to a distributor via a public telephone circuit or a cable television circuit as purchase information. Each program to be provided by the PPV has been enciphered respectively, and the distributor transmits cryptanalytic information called "key" that deciphers the program bought by the user according the purchase information to the IRD of the user who bought the program. Then, the IRD deciphers the program bought by the user with the above cryptanalytic information, and displays the deciphered program.

Furthermore, in the satellite broadcasting or the cable television, a service called video on demand (hereinafter, this is referred to as VOD) has been considered in which a user transmits the distribution request (request) of a desired program to the distributor when he wants to do, and the above distributor distributes the program to the user who transmitted the above distribution request responding to this. By using the above VOD service, the user can view his desired program when he wants as if he operates a video tape recorder (VTR) being near at hand.

In the above PPV service, it is necessary that the user previously buy the program before the program is broadcasted. Therefore, there is a problem that the user must remember the channel of his bought program and its air time, and if he forget this, he fails to view or record the above program.

Moreover, in this VOD service, there is a problem that when the user records his bought program by the VTR, he must operate the VTR in synchronization with the start of the distribution of the above bought program, so that the operation is troublesome.

### SUMMARY OF THE INVENTION

Particular and preferred aspects of the present invention are set out in the accompanying independent and dependent claims. Features of the dependent claims may be combined with features of the independent claims as appropriate, and in combinations other than those explicitly set out in the claims.

The invention provides a program distribution system, a method of program distribution, a transmitter and a receiver enabling the user to easily buy a program and having improved operability.

In accordance with preferred embodiments of the invention, a program distribution system is provided comprising distributing program storing means for storing plural distributing programs, distribution control means for receiving a distribution request to request the distribution of a distributing program, formed in a free text described in the arbitrary style of the user of specified receiving means from the receiving means, for collating a word described in the distribution request with each title of the distributing programs stored in the distributing program storing means, and if the title corresponding to the word described in the distributing request is found, for reading out the distributing program having the above title from the distributing program storing means, distribution means for distributing the read-out distributing program to the receiver, and the receiving means for receiving the distributed program. Thus, a program distribution system by which a user can easily buy a program can be obtained.

Moreover, if the title corresponding to the word described in the distribution request is found, the distribution control means preferably transmits a notice of correspondence showing that the above corresponding title was found to the receiving means, and at the same time, it transmits a control command to record the distributed program by controlling a video tape recorder that is connected to the receiving means by attaching to the notice of correspondence.

The distribution request is preferably compared with each title of the distributing programs, and if a title corresponding to the word described in the distribution request is found, the distributing program having the above title is distributed. Therefore, the user can enter the distribution request in his arbitrary style; he can easily perform distribution request.

Furthermore, since the video tape recorder control command will in preferred embodiments be transmitted by attaching to the notice of correspondence, it is unnecessary that the user separately operates the video tape recorder; the operability in program recording can be improved.

### BRIEF DESCRIPTION OF THE DRAWINGS

The present invention will be described further, by way of example only, with reference to preferred embodiments thereof as illustrated in the accompanying drawings, in which:
Fig. 1 is a block diagram showing the configuration of a digital broadcasting system of an embodiment of the present invention;
Fig. 2 is a block diagram showing the configuration of an IRD;
Fig. 3 is a flowchart showing program distribution processing;
Fig. 4 is a diagram showing an example of entry in a request mail; and
Fig. 5 is a diagram illustrating an example of entry in an answer mail.

### DETAILED DESCRIPTION OF AN EMBODIMENT

Preferred embodiments of the present invention will be described with reference to the accompanying drawings:

### (1) Configuration of Digital Satellite Broadcasting System

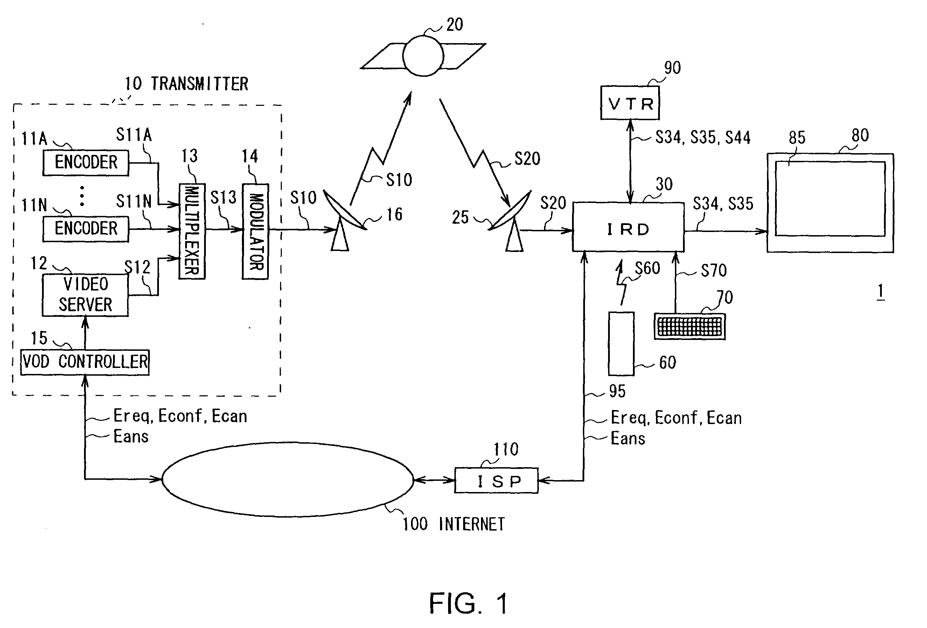

Referring to Fig. 1, 1 generally shows a digital satellite broadcasting system. On a sending end, a transmitter 10 compressively codes video and audio signals on plural channels supplied from external equipment by each corresponding encoder 11A to 11N according to an moving picture experts group (MPEG)-2 system, and transmits the coded signals to a multiplexer 13 as bit streams S11A to S11N.

On the other hand, a VOD controller 15 acting as distribution control means controls a video server 12 acting as distributing program storing means according to a distribution request in a video on demand (hereinafter, it is referred to as VOD) service, transmitted from an IRD 30, to encipher a program described in the above distribution request, and transmitting the enciphered program to the multiplexer 13 as a VOD bit stream S12.

The multiplexer 13 acting as distribution means divides the bit streams S11A to S11N and the VOD bit stream S12 into packets in 188byte length called transport stream (TS) packets, and then performs time division multiplexing on them for each packet and generating a transport stream S13 and supplies this to a modulator 14 acting as distribution means. The modulator 14 modulates the transport stream S13 and transmits the modulated data to a broadcast satellite 20 as a broadcast wave S10 via a transmitting antenna 16. The broadcast satellite 20 receives the broadcast wave S10 with a transponder (not shown) and then amplifies this, and transmits the amplified wave to the earth as a broadcast wave S20.

On a receiving end, the integrated receiver decoder (IRD) 30 acting as receiving means receives the broadcast wave S20 via a receiving antenna 25, and decodes video and sound on a channel that is selected by user's operation of a remote commander 60 from among the video and audio signals on the plural channels multiplexed on the above broadcast wave S20. The IRD 30 transmits thus generated video signal S34 and audio signal S35 to the display 85 and the speaker (not shown) of a monitor 80 to output as video and sound.

A video tape recorder (VTR) 90 is connected to the IRD 30. The IRD 30 controls the above VTR 90 according to user's operation, and outputs the video signal S34 and the audio signal S35 to the above VTR 90.

Furthermore, a keyboard 70 is connected to the IRD 30; the above IRD 30 can transmit a text entered on the keyboard 70 by the user to an internet 100 as an e-mail via a telephone line 95 and an internet service provider (ISP) 110, and can perform distribution request in the VOD service to the transmitter 10 using the above e-mail.

### (2) Configuration of IRD 30

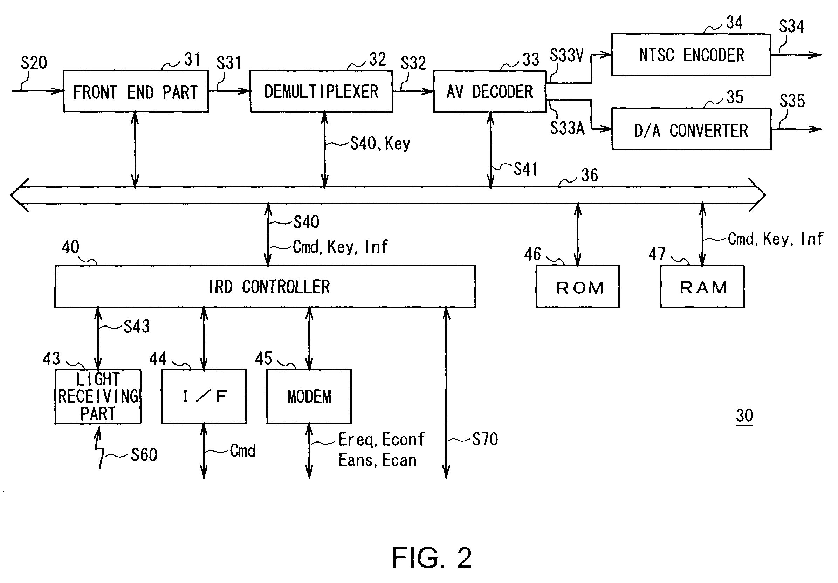

Fig. 2 generally shows the IRD 30. The broadcast wave S20 received via the receiving antenna 25 is demodulated in a front end part 31, and a bit stream S31 is generated. This bit stream S31 is transmitted to a demultiplexer 32.

The demultiplexer 32 separates the packets on the channel selected by the user from the bit stream S31. That is, if the user selects his desiring channel by operating the remote commander 60 (Fig. 1), the above remote commander 60 superimposes a channel select command entered by the user's operation on an infrared light S60, and transmits this to the IRD 30.

A light receiving part 43 provided in the IRD 30 receives and demodulates the infrared light S60 and obtaining the channel select command as an operational signal S43, and transmits this to an IRD controller 40. The IRD controller 40 supplies a control signal S40 that is a command to select the channel selected by the user to the demultiplexer 32 via a bus 36, based on the operational signal S43. The demultiplexer 32 operates responding to the control signal S40 to separate the TS packets on the channel selected by the user from the transport stream S31, and supplies this to an audio visual (AV) decoder 33 as a bit stream S32.

The AV decoder 33 decodes the bit stream S32 by the MPEG-2 system and generating video data S33V and audio data S33A, and outputs each of them to an National Television System Committee (NTSC) encoder 34 and a digital/analog (D/A) converter 35. The NTSC encoder 34 converts the video data S33V into an analog video signal in the NTSC system and outputting this as a video signal S34 and displaying on the monitor (Fig. 1). The D/A converter 35 performs analog conversion on the audio data S33A, and outputs this to the monitor 80 as an audio signal S35.

Also the keyboard 70 (Fig. 1) is connected to the IRD controller 40. The above keyboard 70 supplies the operation on the keyboard by the user to the IRD controller 40 as a keyboard input signal S70.

### (3) Program Distribution Processing by E-mail

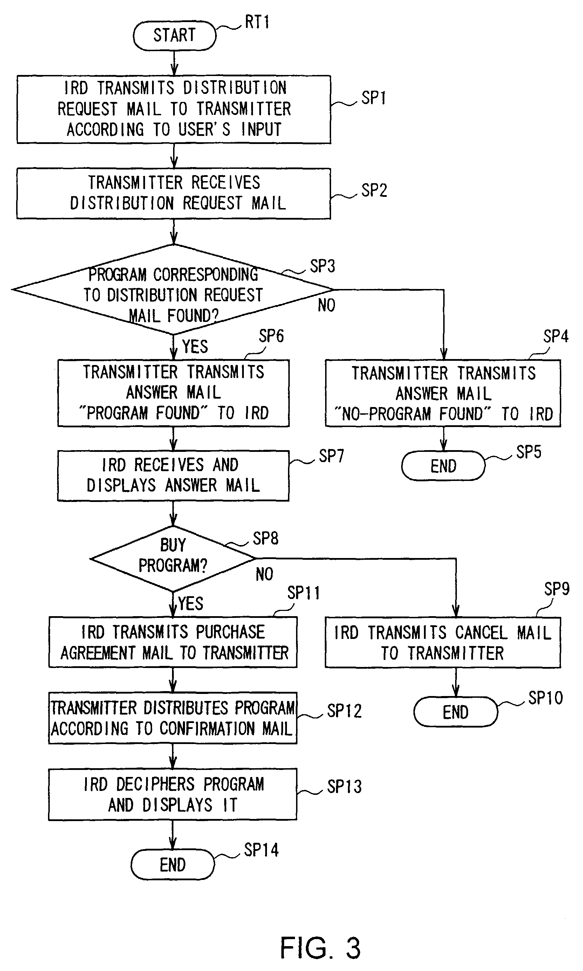

The digital satellite broadcasting system 1 executes program distribution processing shown in Fig. 3 to perform the VOD service.

Specifically, the digital satellite broadcasting system 1 (Fig. 1) starts the processing in RT1. In step SP1, the IRD controller 40 of the IRD 30 (Fig. 2) converts a distribution request to request the distribution on the VOD into an e-mail according to the entry of the above distribution request by user's keyboard operation, and transmits this to the transmitter 10 as a distribution request mail Ereq via a modem 45, the telephone line 95 (Fig. 1), the ISP 110 and the internet 100.

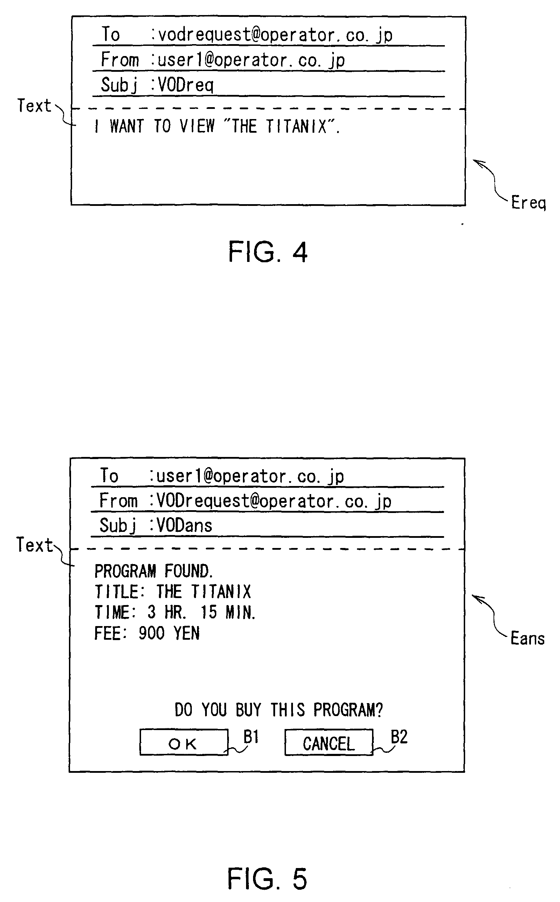

Fig. 4 shows an example of entry in the distribution request mail Ereq. In the field of sending e-mail address "To", the e-mail address of the VOD controller 15 of the transmitter 10 "vodrequest@operator.co.jp" is entered by the IRD controller 40. In the field of sender's e-mail "From", the e-mail address of the IRD 30 (Fig. 1) "user1@operator.co.jp" is entered. And a predetermined subject showing that the e-mail is a VOD distribution request mail "VODreq" is entered in the field of e-mail subject "Subj".

The user enters the distribution request showing the title of a program that he wants its distribution is described in the text field of an e-mail Text on the keyboard 70 (Fig. 1). The entry in the above distribution request is similar in operation to the entry in a normal e-mail. Besides, a distribution request has no specific rule of entry, and the user may enter the title of the program in a free style (free text). Therefore, the user can easily fill up the distribution request. Moreover, it is unnecessary that when the user enters the distribution request statement, the user previously confirms whether or not the program wanting its distribution has been provided in the VOD service; the user can easily fill up the distribution request.

In step SP2, the VOD controller 15 provided in the transmitter 10 receives the distribution request mail Ereq via the internet 100. In the following step SP3, the VOD controller 15 compares each word in the text (distribution request) in the text field of the distribution request mail Ereq with each title of the plural VOD programs stored in the video server 12 provided in the transmitter 10, and determines whether or not a program corresponding to the distribution request found.

If a negative result is obtained in step SP3, this means that any program corresponding to the distribution request statement does not exist. The VOD controller 15 proceeds to step SP4. Then, in step SP4, the VOD controller 15 transmits an answer mail Eans of "no-program found" showing that any program corresponding to the distribution request has not been provided in the VOD service to the IRD 30, and finishing the processing in step SP5.

On the other hand, if an affirmative result is obtained in step SP3, this means that there is a program corresponding to the distribution request. The VOD controller 15 proceeds to step SP6. Then, in step SP6, the VOD controller 15 transmits the answer mail Eans of "program found" showing that there is a program corresponding to the distribution request to the IRD 30.

Fig. 5 shows an example of description on the answer mail Eans in the case of "program found". In the field of sending e-mail address "To", "user1@operator.co.jp" showing the e-mail address of the IRD 30 (Fig. 1) is entered by the VOD controller 15. In the field of sender's e-mail "From", "vodserver@operator.co.jp" showing the e-mail address of the VOD controller 15 (Fig. 1) is entered. And a predetermined subject showing that the mail is an answer mail in the VOD "VODans" is entered in the field of e-mail subject "Subj". In the text field of the e-mail Text, the composition "program found" showing that the program corresponding to the distribution request is found, the title of the program, its time, its price, the composition "Do you buy this program?" and an OK button B1 and a cancel button B2 programmed by the hypertext markup language (HTML) are entered by the VOD controller 15. Moreover, accounting information on the program Inf, cryptanalytic information Key and a control command Cmd to make the VTR 90 that is connected to the IRD 30 start recording in synchronization with the start of broadcasting the program are attached to the answer mail Eans.

In step SP7, the IRD controller 40 of the IRD 30 receives the answer mail Eans, controls the NTSC decoder 34 according to this, and outputs and displays the content of the above answer mail Eans on the monitor 80 (Fig. 1) as the video signal S34, and at the same time, it stores the accounting information Inf, cryptanalytic information Key and control command Cmd attached to the answer mail Eans in a random access memory (RAM) 47.

The user reads the answer mail Eans displayed on the monitor 80 and determines whether to buy the program or not. And the user specifies the OK button B1 (if he buy the program) or the cancel button B2 (if he does not buy the program) by operating the remote commander 60 or the keyboard 70.

In step SP8, the IRD controller 40 of the IRD 30 determines whether the user buys the program or not according to the specification by the user of the OK button B1 or the cancel button B2. If a negative result is obtained in step SP8, this means that the user specified the cancel button B2 and cancelled the purchase of the program; the IRD controller 40 proceeds to step SP9 to transmit a cancel mail Ecan showing the cancel of the purchase of the program to the transmitter 10, and finishes the processing in step SP10.

On the other hand, if an affirmative result is obtained in step SP8, this means that the user specified the OK button B1 and agreed to the purchase of the program; the IRD controller 40 proceeds to step SP11 to transmit a purchase agreement mail Econf showing the agreement to the purchase of the program to the transmitter 10.

In step SP12, the VOD controller 15 of the transmitter 10 transmits the program described in the answer mail Eans to the multiplexer 13 as the bit stream S12 by controlling the video server 12 according to the purchase agreement mail Econf, and multiplexes the above bit stream S12 on the broadcast wave S10 and transmitting.

In step SP13, the IRD controller 40 of the IRD 30 reads out the cryptanalytic information Key from the RAM 47, and supplies the above cryptanalytic information Key and the control signal S40 showing the command to select the VOD channel to the demultiplexer 32 via the bus 36. The demultiplexer 32 operates responding to the control signal S40, and separates the TS packets on the VOD channel from the transport stream S31, and at the same time, deciphers the above TS packets by means of the cryptanalytic information Key and displays the result on the monitor 80 (Fig. 1).

Moreover, the IRD controller 40 reads out the control command Cmd from the RAM 47, and supplies this to the VTR 90 (Fig. 1) via the interface 44 in synchronization with the start of broadcasting the program on the VOD channel. The VTR 90 operates responding to the control command Cmd to record the video signal S34 and the audio signal S35.

The digital satellite broadcasting system 1 performs program distribution in the VOD service in this manner, and finishes the processing in step SP14.

### (4) Operation and Effects

According to the above configuration, the user enters the distribution request to request the VOD distribution of an arbitrary program in a free style on the keyboard 70. The IRD 30 converts the above distribution request into an e-mail and transmitting this to the transmitter 10 as the distribution request mail Ereq.

The VOD controller 15 of the transmitter 10 compares each word in the distribution request with each title of the plural VOD programs stored in the video server 12 provided in the transmitter 10 to determine whether a program corresponding to the distribution request is found or not. If the program corresponding to the distribution request is not found, the VOD controller 15 transmits the answer mail Enas of "no-program found" to the IRD 30. On the other hand, if the program corresponding to the distribution request is found, the VOD controller 15 transmits the answer mail Eans of "program found" to the IRD 30. At this time, the VOD controller 15 attaches the cryptanalytic information Key of the program and the VTR 90 control command Cmd to the answer mail Eans.

If receiving the answer mail Eans of "program found", the IRD 30 displays this on the monitor 80. The user watches the above display and determines whether to buy or not the program, and enters the above determined result to the IRD 30 using the remote commander 60 or the keyboard 70. If the user agrees to buy the program, the IRD 30 transmits the purchase agreement mail Econf to the transmitter 10. The transmitter 10 multiplexes the program that the user requested to distribute on the broadcast wave S10 according to the purchase agreement mail Econf and transmitting this.

The IRD 30 receives the broadcast wave S10, deciphers the program by means of the cryptanalytic information Key and displaying the deciphered program on the monitor 80, and at the same time, controls the VTR 90 according to the control command Cmd to execute the recording of the VOD program.

According to the above configuration, since the VOD controller 15 compares the distribution request with each title of the VOD programs stored in the video server 12 to determine the presence of the program corresponding to the distribution request, the user can enter the distribution request in a free style; the user can easily perform distribution request on the VOD service.

Moreover, since the VOD controller 15 transmits the VTR 90 control command Cmd by attaching to the answer mail Eans and the IRD 30 controls the VTR 90 according to the control command Cmd to execute the recording of the VOD program, the user can easily record the VOD program without operating the VTR 90 separatively.

### (5) Another Embodiment

In the aforementioned example embodiment, the present invention is applied to a digital satellite broadcasting system using a broadcast satellite. However, the present invention is not only limited to this but also it may be applied to another broadcasting system such as, for example, a cable television. In this case, the distribution request mail Ereq, the answer mail Eans, the purchase agreement mail Econf and the cancel mail Ecan may be transmitted/received via the cable circuit of a cable television.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A program distribution system comprising:
distributing program storing means for storing plural distributing programs;
distribution control means for receiving a distribution request that is to request the distribution of one of said distributing programs, transmitted from prescribed receiving means, and if the program corresponding to said distribution request has been stored in said distributing program storing means, for reading out the above program from said distributing program storing means;
distribution means for distributing said read-out program to said receiving means; and
said receiving means for receiving said distributed program.

2. The program distribution system according to claim 1, wherein:
a word is described in said distribution request; and
in the case where each title of said distributing programs has been stored in said distributing program storing means,
said distribution control means compares the word described in said distribution request with each title of the distributing programs stored in said distributing program storing means,
and if a title which corresponds to the word described in said distribution request is found, said distribution control means reads out said distributing program having the above title from said distributing program storing means.

3. The program distribution system according to claim 1, wherein;
said distribution request is converted into an e-mail and is transmitted to said distribution control means.

4. The program distribution system according to claim 1, wherein;
said distribution request is a free text described in the arbitrary style of the user of said receiving means.

5. The program distribution system according to claim 1, wherein;
if the program corresponding to said distribution request has been stored in said distributing program storing means, said distribution control means transmits a notice of correspondence showing the finding of the above corresponding program to said receiving means.

6. The program distribution system according to claim 2, wherein;
if said title corresponding to the word described in said distribution request is found, said distribution control means transmits a notice of correspondence showing the finding of the above corresponding title to said receiving means.

7. The program distribution system according to claim 1, wherein;
in the case where the program corresponding to said distribution request has been stored in said distributing program storing means, if receiving a notice of confirmation that the user of said receiving means agrees with the purchase of the above program from said receiving means, said distribution control means reads out said program from said distributing program storing means.

8. The program distribution system according to claim 2, wherein;
in the case where said title corresponding to the word described in said distribution request, if receiving a notice of confirmation that the user of said receiving means agrees with the purchase of said program having the above title from said receiving means, said distribution control means reads out said program from said distributing program storing means.

9. The program distribution system according to claim 5, wherein;
said distribution control means transmits a control command to make a video tape recorder that is connected to said receiving means record said distributed program, to said receiving means by attaching to said notice of correspondence.

10. The program distribution system according to claim 6, wherein;
said distribution control means transmits a control command to make a video tape recorder that is connected to said receiving means record said distributed program, to said receiving means by attaching to said notice of correspondence.

11. A method of program distribution for distributing, according to a distribution request transmitted from predetermined receiving means, a distributing program described in the above distribution request to said receiving means, comprising:
the distribution request transmitting step of transmitting said distribution request from said receiving means to predetermined transmission means;
the comparison step of comparing the program that corresponds to said distribution request with distributing programs stored in predetermined distributing program storing means; and
the distribution step, if the program corresponding to said distribution request has been stored in said distributing program storing means, of reading out the above program from said distributing program storing means and distributing this to said receiving means.

12. The method of program distribution according to claim 11, wherein:
a word is described in said distribution request;
in the case where each title of said distributing programs has been stored in said distributing program storing means, the comparison step compares the word described in said distribution request with each title of the distributing programs stored in said distributing program storing means; and
in said distribution step, if a title corresponding to the word described in said distribution request is found in said titles, said distributing program having the above title is read out from said distributing program storing means and distributed to said receiving means.

13. The method of program distribution according to claim 11, wherein;
said distribution request is converted into an e-mail and transmitted to said transmission means.

14. The method of program distribution according to claim 11, wherein;
said distribution request is a free text described in the arbitrary style of the user of said receiving means.

15. The method of program distribution according to claim 11, wherein;
in the case where the program corresponding to said distribution request has been stored in said distributing program storing means, said distribution step transmits a notice of correspondence that there is said distributing program being the above program to said receiving means.

16. The method of program distribution according to claim 12, wherein;
if a title corresponding to the word described in said distribution request is found in said titles, said distribution step transmits a notice of correspondence showing the finding of the above corresponding title.

17. The method of program distribution according to claim 11, wherein;
in the case where the program corresponding to said distribution request has been stored in said distributing program storing means, if receiving a notice of confirmation that the user of said receiving means agrees with the purchase of the above program from said receiving means, said distribution step reads out said program from said distributing program storing means and distributing this to said receiving means.

18. The method of program distribution according to claim 12, wherein;
in the case where said title corresponding to the word described in said distribution request is found, if receiving a notice of confirmation that the user of said receiving means agrees the purchase of said program having the above title from said receiving means, said distribution step reads out said program from said distributing program storing means and distributing this to said receiving means.

19. The method of program distribution according to claim 15, wherein;
said distribution step transmits a control command to make a video tape recorder that is connected to said receiving means record said distributed program, to said receiving means by adding to said notice of correspondence.

20. The method of program distribution according to claim 16, wherein;
said distribution step transmits a control command to make a video tape recorder that is connected to said receiving means record said distributed program, to said receiving means by adding to said notice of correspondence.

21. A transmitter for distributing, according to a distribution request transmitted from predetermined receiving means, a distributing program described in the above distribution request, comprising:
distributing program storing means for storing a plurality of said distributing programs;
distribution control means, if the program that corresponds to said distribution request corresponds to a word stored in said distributing program storing means, for reading out the above program from said distributing program storing means; and
distribution means for transmitting said read-out distributing program.

22. The transmitter according to claim 21, wherein:
a word is described in said distribution request;
in the case where each title of said distributing programs has been stored in said distributing program storing means, said distribution control means compares the word described in said distribution request with each title of the distributing programs stored in said distributing program storing means; and
if a title that corresponds to the word described in said distribution request is found, said distribution control means reads out said distributing program having the above title from said distributing program storing means.

23. The transmitter according to claim 21, wherein;
said distribution request is converted into an e-mail and transmitted to said transmitter.

24. The transmitter according to claim 21, wherein;
said distribution request is a free text described in the arbitrary style of the user of said receiving means.

25. The transmitter according to claim 21, wherein;
if the program corresponding to said distribution request has been stored in said distributing program storing means, said distribution control means transmits a notice of correspondence showing the finding of the above program to said receiving means.

26. The transmitter according to claim 22, wherein;
if said title corresponding to the word described in said distribution request is found, said distribution control means transmits a notice of correspondence showing the finding of the above corresponding program to said receiving means.

27. The transmitter according to claim 21, wherein;
if the program corresponding to said distribution request has been stored in said distributing program storing means, said distribution control means receives a notice of confirmation that the user of said receiving means agrees with the purchase of the above program, and reads out said program from said distributing program storing means.

28. The transmitter according to claim 22, wherein;
in the case where said title corresponding to the word described in said distribution request is found, if receiving a notice of confirmation that the user of said receiving means agrees with the purchase of said program having the above title from said receiving means, said distribution control means reads out said program from said distributing program storing means.

29. The transmitter according to claim 25, wherein;
said distribution control means transmits a control command to make a video tape recorder that is connected to said receiving means record said distributed program, to said receiving means by attaching to said notice of correspondence.

30. The transmitter according to claim 26, wherein;
said distribution control means transmits a control command to make a video tape recorder that is connected to said receiving means record said distributed program, to said receiving means by attaching to said notice of correspondence.

31. A receiver comprising:
transmission means for transmitting a distribution request to request the distribution of a specified distributing program to a predetermined transmitter; and
receiving means for receiving said distributing program to be distributed from said transmitter according to said distribution request.

32. The receiver according to claim 31, wherein;
said distribution request is converted into an e-mail and transmitted to said predetermined transmitter.

33. The receiver according to claim 31, wherein;
said distribution request is a free text described in the arbitrary style of the user of said receiving means.

34. The receiver according to claim 31, wherein;
said receiving means receives a notice of correspondence that there is a program corresponding to said distribution request from said transmitter.

35. The receiver according to claim 31, wherein;
if receiving said notice of correspondence, said transmission means transmits a notice of confirmation that the user of said receiver agrees with the purchase of the program corresponding to said distribution request to the transmitter.

36. The receiver according to claim 31, wherein;
said receiving means receives a control command to make a video tape recorder that is connected to said receiving means record said received distributing program, from said transmitter.
